# EUROPÄISCHE PATENTSCHRIFT

(11) **EP 1 567 433 B1**
(45) Veröffentlichungstag und Bekanntmachung des Hinweises auf die Patenterteilung: **01.08.2007**
(21) Anmeldenummer: 02796472.5
(22) Anmeldetag: 05.12.2002
(51) Int. Cl.: B65G 49/06, C03B 33/02

(54) **VORRICHTUNG ZUM FESTHALTEN VON WERKSTOFFPLATTEN, WIE GLASSCHEIBEN WÄHREND IHRER BEARBEITUNG**
DEVICE FOR SECURING MATERIAL PLATES, SUCH AS GLASS SHEETS, DURING THE WORKING THEREOF
DISPOSITIF SERVANT A MAINTENIR DES PLAQUES DE MATIERE, TELLES QUE DES FEUILLES DE VERRE, PENDANT LEUR TRAVAIL

(43) Veröffentlichungstag der Anmeldung: 31.08.2005
(73) Patentinhaber: Lisec, Peter, 3363 Amstetten-Hausmening (AT)
(72) Erfinder: Lisec, Peter, 3363 Amstetten-Hausmening (AT)
(74) Vertreter: Beer, Manfred
(86) Internationale Anmeldenummer: PCT/AT2002/000342
(87) Internationale Veröffentlichungsnummer: WO 2004/050516

(56) Entgegenhaltungen:
- DE-A- 19 806 306
- US-A1- 2001 018 313

## Beschreibung

Die Erfindung betrifft eine Vorrichtung zum Bearbeiten von Werkstoffplatten, wie Glasscheiben, mit einer Stützeinrichtung für die Werkstoffplatte und mit einem Werkzeug zum Bearbeiten der Werkstoffplatten.

Stützeinrichtungen für Werkstoffplatten, insbesondere Glasplatten, sind im Stand der Technik als Rollenfelder, Walzenfelder oder Luftkissenwände, insbesondere als Teil von Isolierglasfertigungsanlagen bekannt. Solange bei der Bearbeitung keine besonders hohen Kräfte auf die Werkstoffplatte (Glasplatte) ausgeübt werden, ist die Stützwirkung dieser Stützeinrichtungen auch ausreichend hoch. Problematisch wird es jedoch, wenn bei der Bearbeitung hohe Kräfte normal zur Plattenebene ausgeübt werden oder die Werkstoffplatten bei der Bearbeitung in Schwingung versetzt werden, da in diesen Fällen ein Festhalten oder Festklemmen der Werkstoffplatte erforderlich wird. Dies bringt aber zum einen die Gefahr mit sich, dass die Werkstoffplatten, wie Glasplatten, beim Festhalten bzw. -klemmen zerkratzt werden und zum anderen nicht oder nur mit relativ hohem Aufwand relativ zur Stützeinrichtung bewegt werden können.

Die US 2001/0018313 (= EP-A-1 110 686) beschreibt eine Vorrichtung zum Schneiden einer Glastafel mit einer Stützwand, die als Luftkissenwand oder Rollenfeld ausgebildet sein kann. Der Stützwand gegenüberliegend ist eine Düse verstellbar vorgesehen, aus der ein Wasserstrahl austritt, mit dem die Glastafel geschnitten wird.

Der Erfindung liegt daher die Aufgabe zu Grunde, eine Vorrichtung der eingangs genannten Gattung anzugeben, bei der durch die Stützeinrichtung sowohl hohe Stützkräfte aufgebracht werden können als auch eine Relativbewegung zwischen Stützeinrichtung und zu bearbeitender Werkstoffplatte möglich ist.

Gelöst wird diese Aufgabe mit einer Vorrichtung mit den Merkmalen des Anspruches 1.

Bei der Erfindung wird die Werkstoffplatte, insbesondere Glasscheibe, nicht - wie im Stand der Technik üblich - mechanisch abgestützt, sondern mit Hilfe eines Flüssigkeitsfilmes, der unter Druck im Spalt zwischen der Werkstoffplatte und den Stützflächen der Stützelemente gebildet wird. Dieser Spalt kann sehr klein sein, beispielsweise 1 mm, so dass eine ausreichend präzise Führung der Werkstoffplatte zwischen den Stützelementen möglich ist, ohne dass es auch bei höheren Anpresskräften oder stärkeren Schwingungen zu einem mechanischen Kontakt zwischen der Werkstoffplatte und den Stützflächen kommt. Gleichzeitig ist aber gewährleistet, dass die Werkstoffplatte zwischen den Stützflächen verschoben werden kann. Soweit Schwingungen sowohl im hochals auch niederfrequenten Bereich mit geringeren oder höheren Amplituden betroffen sind, die vornehmlich beim Schleifen der Werkstoffplatten auftreten, hat sich gezeigt, dass der Flüssigkeitsfilm eine hervorragende schwingungsdämpfende Funktion aufweist. Dadurch kann sowohl eine höhere Oberflächenqualität als auch eine höhere Schleifleistung erzielt werden.

Die erfindungsgemäße Stützeinrichtung kommt bevorzugt in Verbindung mit herkömmlichen Stützwänden zum Einsatz, die als Rollenfelder, Walzenfelder oder Luftkissenwände ausgeführt sein können. Die erfindungsgemäße Stützeinrichtung ist in diesem Fall nur in jenen Bereichen angeordnet, die im Nahbereich des Werkzeuges liegen. Es versteht sich aber, dass die erfindungsgemäße Stützeinrichtung auch alleine eingesetzt werden kann.

Im Rahmen der Erfindung ist es möglich, dass die Stützelemente im unmittelbaren Bereich neben dem Werkzeug angeordnet sind. Es ist beispielsweise möglich, dass die Stützelemente im wesentlichen ringförmig ausgebildet sind und das Werkzeug umgeben. Dies gewährleistet eine hervorragende Stützwirkung in der unmittelbaren Nähe des Werkzeuges, wo die höchste Belastung auftritt.

Alternativ oder zusätzlich ist es aber auch möglich, dass wenigstens ein Paar von Stützelementen vorgesehen ist, die sich balkenartig vorzugsweise über die gesamte Breite der Werkstoffplatte erstrecken. Auf diese Weise kann die Werkstoffplatte, insbesondere Glasscheibe, großflächig abgestützt werden, wobei es wie erwähnt auch möglich ist, zusätzlich im unmittelbaren Bereich neben dem Werkzeug eine zusätzliche Stützeinrichtung vorzusehen.

Weitere bevorzugte Ausführungsformen der Erfindung sind Gegenstand der übrigen Unteransprüche.

Weitere Merkmale und Vorteile der Erfindung ergeben sich aus der nachfolgenden Beschreibung bevorzugter Ausführungsformen der Erfindung unter Bezugnahme auf die Zeichnungen.

Es zeigt:
Fig. 1 eine Vorderansicht einer Ausführungsform einer erfindungsgemäßen Vorrichtung,
Fig. 2 einen Schnitt durch die Vorrichtung von Fig. 1 entlang der Linie II-II,
Fig. 3 eine schematische Detailansicht einer weiteren Ausführungsform der Erfindung und
Fig. 4 eine schematisierte Schrägansicht der Ausführungsform von Fig. 3.

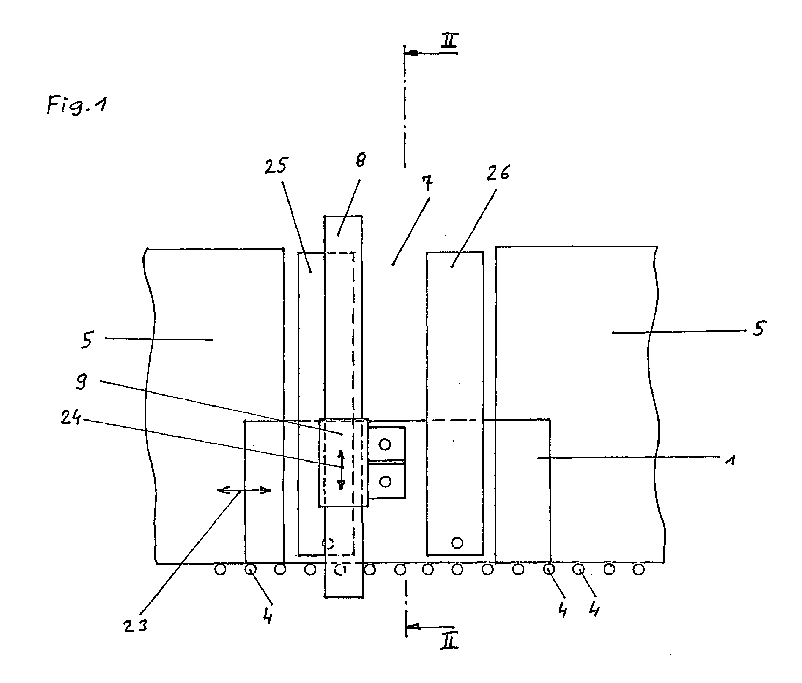

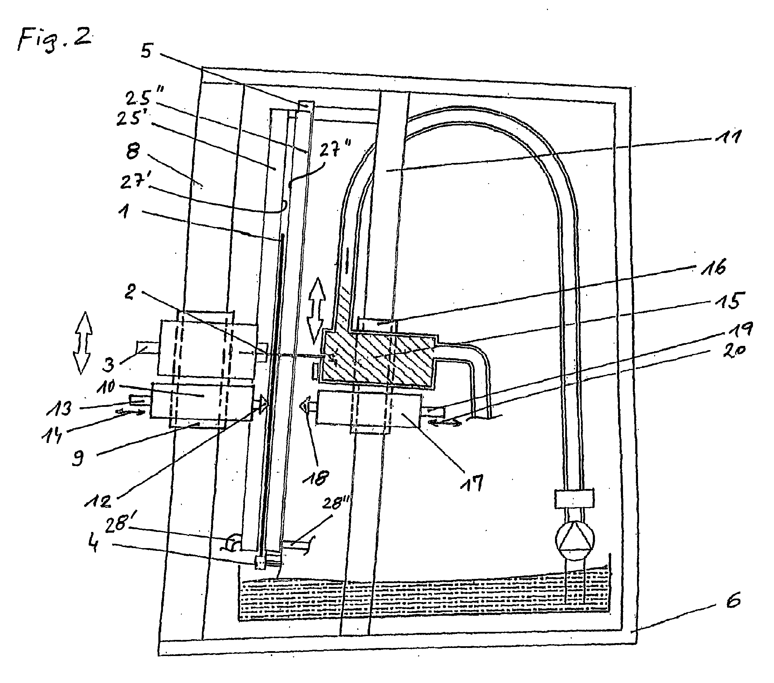

In Fig. 1 und 2 ist eine Vorrichtung gemäß der Erfindung dargestellt, in der eine Werkstoffplatte, z.B. eine Glasscheibe 1, etwa senkrecht stehend an einer Stützwand 5 anliegt. Die Stützwand 5 ist an einem Maschinengestell 6 angeordnet. Die Glasscheibe 1 steht auf einem Horizontalförderer auf, der im dargestellten Ausführungsbeispiel durch Transportrollen 4 gebildet wird. Derartige Stützwände 5 sind z.B. als Rollenfelder, Walzenfelder oder Luftkissenwände, insbesondere als Teil von Isolierglasfertigungsanlagen, im Stand der Technik bekannt. Gleiches gilt für verschiedenste Ausführungsformen von Horizontalförderern.

Die Stützwand 5 ist durch eine Ausnehmung in Form eines vertikal verlaufenden Schlitzes 7 unterbrochen. Im Bereich des Schlitzes 7 sind vor und hinter der Stützwand 5 vertikal ausgerichtete Führungen 8 und 11 angeordnet. Auf der vor der Stützwand 5, das heißt auf Seite der Stützwand 5, an der die Glasscheibe 1 anliegt, angeordneten Führung 8 ist eine Düse 2 verfahrbar, die über einen Anschluss 3 mit Wasser unter hohem Druck, dem abrasive Partikel beigemischt sein können, aus einer an sich bekannten und daher nicht dargestellten und beschriebenen Hochdruckpumpe versorgt wird. Durch aufeinanderfolgendes oder gleichzeitiges Verfahren der Düse 2 an der Führung 8 und Verfahren der Glasscheibe 1 entlang des Horizontalförderers 4 können beliebig gestaltete Schnitte durch den Wasserstrahl in der Scheibe 1 hergestellt werden.

Die Düse 2 ist an einem Schlitten 9 auf der Führung 8 verfahrbar. Auf diesem Schlitten 9 befindet sich des weiteren ein Antrieb 10 für ein Werkzeug 12, das im in Fig. 2 dargestellten Ausführungsbeispiel ein Schleifkegel ist. Das Werkzeug 12 ist an einer Werkzeugspindel 13 befestigt, die entlang des Doppelpfeiles 14 vor und zurück verstellbar ist. Mit Hilfe des Werkzeuges 12 können mit der Düse 2 bzw. des Wasserstrahles hergestellte, beispielsweise runde Ausnehmungen angesenkt werden. Anstelle eines Schleifkegels können aber auch Schleifscheiben oder Polierscheiben zum Nachbearbeiten der Schnittränder auf der Werkzeugspindel 13 befestigt sein.

Auf der an der Rückseite der Stützwand 5 angeordneten Führung ist eine wassergefüllte Kammer 15 angeordnet, in welche der Wasserstrahl eintritt, um eine unerwünschte Sprühnebelbildung, Reflexion des Wasserstrahls mit den abrasiven Teilchen auf die Rückseite der Glasscheibe 1 sowie eine unerwünschte Lärmentwicklung zu vermeiden. Die wassergefüllte Kammer 15 ist auf einem Schlitten 16 synchron zur Düse 2 auf und ab verfahrbar. Am Schlitten 16 ist des weiteren ein zweiter Antrieb 17 für ein zweites Werkzeug 18 befestigt, wobei das Werkzeug 18 wiederum an einer Spindel 19 in Richtung des Doppelpfeiles 20 vor und zurück verstellbar ist. Mit dem Werkzeug 18 können ebenso wie mit dem Werkzeug 12 von der Rückseite zum Beispiel Öffnungen angesenkt oder beliebig verlaufende Kanten geschliffen werden. An Stelle des Schleifkegels 18 können wiederum z.B. Schleifscheiben oder Polierscheiben eingesetzt werden. Die Kammer 15 und das Werkzeug 18 sind an einem gemeinsamen Schlitten 16 angebracht, der auf der Führung 11 verfahrbar ist.

Wie zum Beispiel in Fig. 1 dargestellt ist, kann die Glasplatte 1 während der Bearbeitung in Richtung des Doppelpfeiles 23 entlang des Horizontalförderers 4 verschoben werden. Auf diese Weise können z.B. horizontal verlaufende Schnitte erzeugt oder bearbeitet werden. Wenn gleichzeitig auch der Schlitten 9 entlang des Doppelpfeiles 24 auf oder ab bewegt wird, können auch schräg verlaufende oder beliebig gekrümmte Schnitte oder z.B. kreisrunde Ausschnitte hergestellt und bearbeitet werden.

Bei dieser Bearbeitung und insbesondere beim Schleifen der Schnittränder wird die Glasscheibe 1 sehr hoher Beanspruchung ausgesetzt, wobei sich insbesondere die dabei entstehenden Schwingungen sehr nachteilig auswirken, da diese abgesehen davon, dass es zum Bruch der Glasscheibe 1 kommen kann, eine saubere Schleifbearbeitung der Schnittränder unmöglich machen und zudem die Glasscheibe 1 durch den Umstand, dass sie unter hochfrequenten Schwingungen an der Stützwand 5 anliegt, beschädigt bzw. zerkratzt werden könnte. Die Lärmentwicklung ist ebenfalls störend.

Um dies zu verhindern, sind in der Ausführungsform gemäß Fig. 1 und 2 zwei Paar von balkenförmigen Stützeinrichtungen 25 und 26 vorgesehen. Jede Stützeinrichtung 25 und 26 besteht aus zwei Stützelementen 25',25" und 26',26", zwischen deren einander zugekehrten Stützflächen 27',27" die Glasscheibe 1 aufgenommen ist. In den Stützflächen 27',27" sind in den Zeichnung nicht dargestellte Öffnungen angebracht. Diese Öffnungen stehen mit Zuleitungen 28',28" in Verbindung, durch welche eine Flüssigkeit, z.B. Wasser, unter einem Druck von beispielsweise 20 bar zugeführt wird. Die balkenförmigen Stützelemente 25',25" und 26',26" können zum Beispiel hohl ausgeführt sein, so dass die Zuleitungen 28',28" unmittelbar mit den Öffnungen in Verbindung stehen. Die aus den Öffnungen austretende Flüssigkeit bildet zwischen den Stützflächen 27',27" und der Werkstoffplatte 1 einen Flüssigkeitsfilm bzw. eine Flüssigkeitsschicht, die zwar eine Bewegung bzw. Schwingung der Glasplatte 1 im rechten Winkel zur Ebene der Werkstoffplatte 1 bzw. der Stützflächen 27', 27" nahezu vollständig verhindert, aber ein Verschieben der Werkstoffplatte 1 in Richtung der Plattenebene erlaubt.

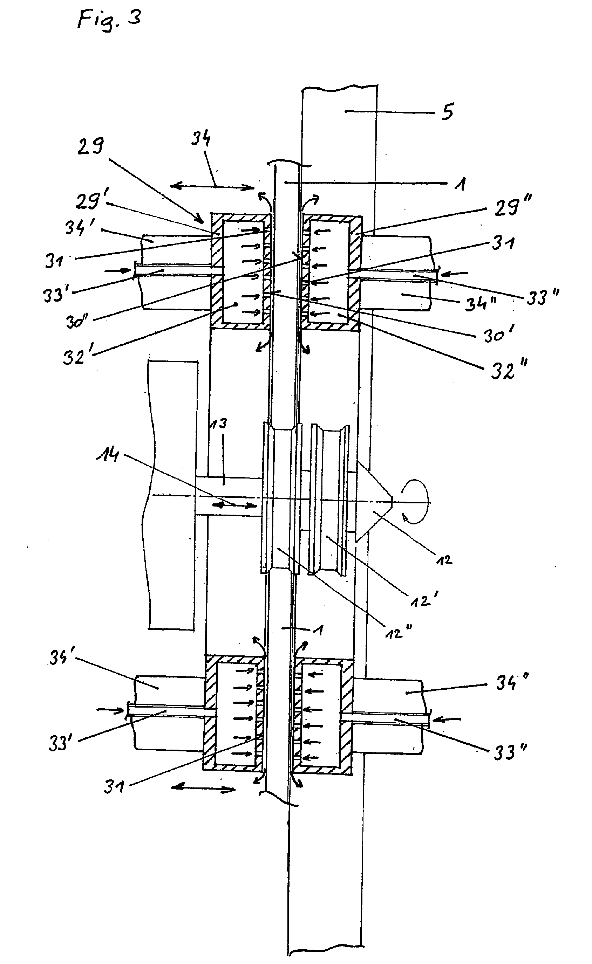

In Fig. 3 ist eine Ausführungsform der erfindungsgemäßen Vorrichtung dargestellt, bei der ein Werkzeug, das aus einer Kombination aus einem Schleifkegel 12, einer Schleifscheibe 12' und einer Polierscheibe 12" besteht, durch eine ringförmige Stützeinrichtung 29 umgeben ist. Die ringförmige Stützeinrichtung 29 besteht aus einem Paar von ringförmigen Stützelementen 29',29", zwischen deren Stützflächen 30',30" die Glasscheibe 1 aufgenommen ist. In den Stützflächen 30',30" sind Öffnungen 31 vorgesehen, die über die gesamten Stützflächen 30',30" regelmäßig verteilt sind. Die Öffnungen 30 stehen mit ringförmigen Hohlräumen 32',32" in Verbindung, die über Leitungen 33',33" mit Flüssigkeit unter hohem Druck versorgt werden. In Fig. 3 sind je zwei Leitungen 33',33" vorgesehen, wobei aber natürlich auch nur eine Leitung 33',33" je Stützelemente 29',29" ausreichend sein kann.

Die Stützelemente 29',29" sind über Halterungen 34',34" mit den Schlitten 9,16 der vorderen Führung 8 und hinteren Führung 11 verbunden, so dass sie synchron mit den Werkzeugen 12 bzw. 18 mitbewegt werden, wenn diese auf den Führungen 8 und 11 auf und ab verschoben werden.

Um die Stützeinrichtung 29 an unterschiedliche Dicken von Glasscheiben 1 anpassen zu können, ist das vordere Stützelement 29' in Richtung des Doppelpfeiles 34 verstellbar, wodurch gewährleistet ist, dass der Spalt zwischen den Stützflächen 30' und 30" sowie der Glasscheibe 1 immer eine bestimmte Breite aufweist, die in Verbindung mit dem bei Bedarf anpassbaren Flüssigkeitsdruck eine ausreichend hohe Stützwirkung für die Glasscheibe 1 aufweist.

In entsprechender Weise sind auch die vorderen, balkenförmigen Stützelemente 25',26' bei der Ausführungsform gemäß Fig. 1 und 2 verstellbar, um die Spaltbreite zwischen den Stützelementen und der Glasscheibe einstellen zu können.

Die hinteren Stützelemente 25",26",29" müssen nicht normal zur Scheibenebene verstellbar sein, da sie mit Bezug zur Stützfläche der Stützwand 5 optimal ausgerichtet sind. Eine Verstellbarkeit wie bei den vorderen Stützelementen 25',26',29' ist aber grundsätzlich denkbar.

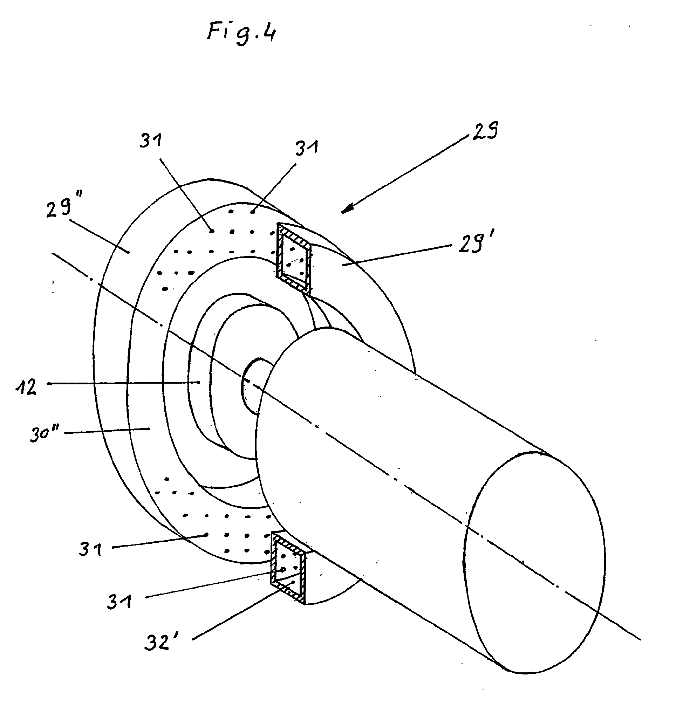

In Fig. 4 ist eine Schrägrissansicht der Ausführungsform von Fig. 3 dargestellt, in der aber nur die Stützelemente 29' und 29" sowie ein Werkzeug 12 zu sehen sind.

Die Größe der Förderleistung der Pumpe für die Flüssigkeit und der Durchmesser bzw. die Anzahl der Bohrungen 31 in den Stützelementen 25,26 und 29 sind so bemessen, dass der Druck im Spalt zwischen den Stützflächen und der Glasscheibe immer so hoch, dass eine ausreichende Stützwirkung entfaltet wird, auch wenn eine größere Anzahl von Öffnungen nicht durch eine Glasscheibe 1 abgedeckt ist. Dies kann insbesondere bei der Ausführung der Stützelemente 25,26 gemäß Fig. 1 und 2 der Fall sein, wenn die Glasscheibe 1 nicht die volle Höhe der Stützelemente 25,26 erreicht, wodurch die Öffnungen im oberen Bereich der Stützelemente nicht abgedeckt sind. Es kann aber natürlich auch bei der in Fig. 3 dargestellten Ausführungsform vorkommen, dass ein Teil der Öffnungen 31 nicht durch eine Glasscheibe 1 abgedeckt ist, wenn sich z.B. gerade ausgeschnittene oder abgeschnittene Bereiche der Glasscheibe 1 vor den Öffnungen 31 befinden.

Um einen zu hohen Druckabfall zu verhindern, bzw. nicht eine stark überdimensionierte Pumpe für die Flüssigkeit verwenden zu müssen, wenn größere oder sehr große Bereiche der Stützelemente bzw. Stützflächen 27',27" oder 30',30" nicht durch eine Glasscheibe 1 abgedeckt werden, kann auch vorgesehen sein, dass die Kammern der Stützelemente 25,26,29 in zwei oder mehrere Abschnitte unterteilt sind, die über getrennte Druckkreise mit Flüssigkeit versorgt werden. Dadurch ist gewährleistet, dass die ausreichend oder vollständig durch eine Glasplatte 1 abgedeckten Abschnitte der Stützflächen 27',27" und 30',30" mit dem vollen Druck beaufschlagt werden, auch wenn in anderen Flächenbereichen mangels Bedeckung durch die Glasscheibe 1 ein Druckabfall eintritt. Beispielsweise können die Hohlräume 32',32" in Fig. 3 durch eine horizontale Trennwand in obere und untere Teilabschnitte unterteilt werden, die jeweils getrennt über die Druckleitungen 33',33" mit Flüssigkeit versorgt werden.

Die Flüssigkeit kann bei der Erfindung Wasser oder eine andere Flüssigkeit sein, die gegebenenfalls mit Wasser gemischt wird. So kann beispielsweise als Flüssigkeit ein Kühlmittel verwendet werden, wenn es sich beim Werkzeug um ein Schleifwerkzeug handelt, um beispielsweise bei geringeren Schleifleistungen auf eine besondere Kühlung des Schleifwerkzeuges verzichten zu können oder bei höheren Schleifleistungen eine zusätzliche Kühlung zu schaffen. ,

## Patentansprüche

1. Vorrichtung zum Bearbeiten von Werkstoffplatten (1), wie Glasscheiben, mit einer Stützeinrichtung (25,26,29) für die Werkstoffplatte (1) und mit einem Werkzeug (12,18) zum Bearbeiten der Werkstoffplatten (1), **dadurch gekennzeichnet, dass** die Stützeinrichtung (25,26,29) paarweise vorgesehene Stützelemente (25',25", 26', 26", 29',29") mit einander zugewandten Stützflächen (27', 27", 30', 30") aufweist, zwischen denen die Werkstoffplatte (1) aufgenommen ist, und dass in den Stützflächen (27',27", 30',30") Öffnungen (31) für unter Druck austretende Flüssigkeit vorgesehen sind.

2. Vorrichtung nach Anspruch 1, **dadurch gekennzeichnet, dass** die Stützelemente (29',29") im unmittelbaren Bereich neben dem Werkzeug (12) angeordnet sind.

3. Vorrichtung nach Anspruch 2, **dadurch gekennzeichnet, dass** die Stützelemente (29',29") im wesentlichen ringförmig ausgebildet sind und das Werkzeug (12) umgeben.

4. Vorrichtung nach einem der Ansprüche 1 bis 3, **dadurch gekennzeichnet, dass** wenigstens ein Paar von Stützelementen (25,26) vorgesehen ist, die sich balkenartig über wenigstens einen Teil der Werkstoffplatte (1), vorzugsweise über die gesamte Erstrekkung der Werkstoffplatte (1) in einer Richtung, erstrecken.

5. Vorrichtung nach Anspruch 4, **dadurch gekennzeichnet, dass** zwei Paar von balkenförmigen Stützelementen (25,26) vorgesehen sind, die sich zu beiden Seiten des Werkzeuges (12) befinden.

6. Vorrichtung nach einem der Ansprüche 1 bis 5, **dadurch gekennzeichnet, dass** eine Stützwand (5) vorgesehen ist, dass die Ebene der Stützwand geringfügig vorzugsweise zwischen 3° und 8° gegenüber der Vertikalen geneigt ist, dass sich im Bereich des unteren Randes der Stützwand (5) eine horizontal ausgerichtete Fördereinrichtung (4) für die Werkstoffplatten (1) befindet, und dass in der Stützwand (5) eine etwa vertikal angeordnete Ausnehmung (7) vorgesehen ist, in der wenigstens eine Stützeinrichtung (2,5,26,29) angeordnet ist.

7. Vorrichtung nach Anspruch 6, **dadurch gekennzeichnet, dass** im Bereich der Ausnehmung (7) eine etwa vertikal ausgerichtete Führung (8,11) vorgesehen ist, auf der das Werkzeug (12,18) und die Stützeinrichtung (29) verfahrbar sind.

8. Vorrichtung nach Anspruch 7, **dadurch gekennzeichnet, dass** vor und hinter der Stützwand (5) eine Führung (8,11) vorgesehen ist, an der das Werkzeug (12,18) und/oder die Stützelemente (29',29") synchron zueinander verfahrbar sind.

9. Vorrichtung nach einem der Ansprüche 1 bis 8, **dadurch gekennzeichnet, dass** das Werkzeug einen Schleifkegel (12) und/oder eine Schleifscheibe (12') und/oder eine Polierscheibe (12") aufweist.

10. Vorrichtung nach einem der Ansprüche 1 bis 9, **dadurch gekennzeichnet, dass** das Werkzeug eine Düse (2) zum Schneiden der Werkstoffplatte (1) mittels eines Wasserstrahles aufweist.

11. Vorrichtung nach einem der Ansprüche 1 bis 10, **dadurch gekennzeichnet, dass** wenigstens ein Stützelement (25',26',29') der Stützeinrichtung (25,26,29) im rechten Winkel zur Ebene der Werkstoffplatte (1) verstellbar ist.

12. Vorrichtung nach einem der Ansprüche 1 bis 11, **dadurch gekennzeichnet, dass** die Stützelemente (25',26',29') mit den Öffnungen (31) verbundene Hohlräume (32',32") aufweisen, die mit Druckmittelleitungen (28',28",33',33") für die Flüssigkeit verbunden sind.

13. Vorrichtung nach Anspruch 12, **dadurch gekennzeichnet, dass** die Hohlräume (32',32") in wenigstens zwei getrennte Abschnitte unterteilt sind, die mit voneinander unabhängigen Anschlüssen (33',33") für Flüssigkeit verbunden sind.

## Claims

1. Device for working of material plates (1), such as glass panes, with a supporting means (25,26,29) for the material plate (1) and with a tool (12,18) for working the material plates (1), **characterized in that** the supporting means (25,26,29) has paired supporting elements (25',25", 26',26",29',29") with supporting surfaces (27',27",30',30") facing one another, between which the material plate (1) is held, and that in the supporting surfaces (27',27",30',30") are provided openings (31) for liquid emerging under pressure.

2. Device according to claim 1, **characterized in that** the supporting elements (29',29") are located in the immediate area next to the tool (12).

3. Device according to claim 2, **characterized in that** the the supporting elements (29',29") are made essentially annular and surround the tool (12).

4. Device according to one of claims 1 to 3, **characterized in that** there is at least one pair of supporting elements (25,26) which extend in the manner of a beam over at least part of the material plate (1), preferably over the entire extension of the material plate (1) in one direction.

5. Device according to claim 4, **characterized in that** there are two pairs of beam-shaped supporting elements (25,26) which are located on either side of the tool (12).

6. Device to one of claims 1 to 5, **characterized in that** there is a support wall (5), that the plane of the support wall is tilted slightly preferably between 3' and 8' relative to the vertical, that in the area of the lower edge of the support wall (5) there is a horizontally aligned conveyor means (4) for the material plates (1), and that in the support wall (5) there is a roughly vertically arranged recess (7) in which at least one supporting means (25,26,29) is located.

7. Device according to claim 6, **characterized in that** the area of the recess (7) there is a roughly vertically aligned guide (8,11) on which the tool (12,18) and the supporting means (29) can be moved.

8. Device according to claim 7, **characterized in that** in front of and behind the support wall (5) there is a guide (8,11) on which the tool (12,18) and/or the supporting elements (19',29") can be moved synchronously to one another.

9. Device according to one of claims 1 to 8, **characterized in that** the tool has a grinding cone (12) and/or a grinding disc (12') and/or a polishing wheel (12").

10. Device according to one of claims 1 to 9, **characterized in that** the tool has a nozzle (2) for cutting the material plate (1) by means of a water jet.

11. Device according to one of claims 1 to 10, **characterized in that** at least one supporting element (25',26',29') of the supporting means (25,26,29) can be moved at a right angle to the plane of the material plate (1) .

12. Device according to one of claims 1 to 11, **characterized in that** the supporting elements (25',26',29') have cavities (32',32") which are connected to the openings (31) and which are connected to pressure fluid lines (28',28",33',33") for the liquid.

13. Device according to claim 12, **characterized in that** the cavities (32',32") are divided into at least two separate sections which are connected to connections (33',33") for liquid which are independent of one another.

## Revendications

1. Dispositif pour l'usinage de plaques de matière (1), telles que vitres en verre, comprenant un dispositif de support (25, 26, 29) pour la plaque de matière (1) et un outil (12, 18) pour l'usinage des plaques de matière (1), **caractérisé en ce que** le dispositif de support (25, 26, 29) comprend des éléments de support (25', 25", 26' , 26", 29', 29") prévus par paires avec des surfaces d'appui (27', 27", 30', 30") opposées entre elles, entre lesquelles est logée la plaque de matière (1), et **en ce que** des ouvertures (31) pour un liquide s'écoulant sous pression sont prévues dans les surfaces d'appui (27', 27", 30', 30'').

2. Dispositif selon la revendication 1, **caractérisé en ce que** les éléments de support (29', 29") sont disposés à proximité immédiate de l'outil (12).

3. Dispositif selon la revendication 2, **caractérisé en ce que** les éléments de support (29', 29") sont sensiblement de forme annulaire et entourent l'outil (12).

4. Dispositif selon l'une des revendications 1 à 3, **caractérisé en ce qu'**au moins une paire d'éléments de support (25, 26) est prévue, lesquels s'étendent en forme de barres sur au moins une partie de la plaque de matière (1), de préférence dans une direction sur toute la longueur de la plaque de matière (1).

5. Dispositif selon la revendication 4, **caractérisé en ce que** deux paires d'éléments de support (25, 26) en forme de barres sont prévues, disposées des deux côtés de l'outil (12).

6. Dispositif selon l'une des revendications 1 à 5, **caractérisé en ce qu'**une paroi d'appui (5) est prévue, **en ce que** le plan de la paroi d'appui est légèrement incliné, de préférence de 3° à 8° par rapport à la verticale, **en ce qu'**un dispositif de transport (4) horizontal pour les plaques de matière (1) est disposé au niveau du bord inférieur de la paroi d'appui (5), et **en ce qu'**un évidement (7) sensiblement vertical est prévu dans la paroi d'appui (5), où est disposé au moins un dispositif de support (25, 26, 29).

7. Dispositif selon la revendication 6, **caractérisé en ce qu'**une glissière (8, 11) sensiblement verticale est prévue au niveau de l'évidement (7), permettant le coulissement de l'outil (12, 18) et du dispositif de support (29).

8. Dispositif selon la revendication 7, **caractérisé en ce qu'**une glissière (8, 11) est prévue devant et derrière la paroi d'appui (5), permettant le coulissement synchrone entre eux de l'outil (12, 18) et/ou des éléments de support (29', 29").

9. Dispositif selon l'une des revendications 1 à 8, **caractérisé en ce que** l'outil comprend un cône de taille (12) et/ou un disque abrasif (12') et/ou un disque à polir (12") .

10. Dispositif selon l'une des revendications 1 à 9, **caractérisé en ce que** l'outil présente une buse (2) pour la découpe par jet d'eau de la plaque de matière (1) .

11. Dispositif selon l'une des revendications 1 à 10, **caractérisé en ce qu'**au moins un élément de support (25', 26', 29') du dispositif de support (25, 26, 29) est réglable perpendiculairement au plan de la plaque de matière (1).

12. Dispositif selon l'une des revendications 1 à 11, **caractérisé en ce que** les éléments de support (25', 26', 29') présentent des cavités (32', 32") reliées aux ouvertures (31), lesquelles sont raccordées à des conduites sous pression (28', 28" , 33', 33'') pour le fluide.

13. Dispositif selon la revendication 12, **caractérisé en ce que** les cavités (32', 32") sont subdivisées en au moins deux parties séparées, reliées à des raccords (33', 33") de fluide indépendants entre eux.
